(19) Europäisches Patentamt
European Patent Office
Office européen des brevets

(11) **EP 4 227 269 A1**

(12) **EUROPEAN PATENT APPLICATION**

(43) Date of publication:
**16.08.2023 Bulletin 2023/33**

(21) Application number: **23151178.3**

(22) Date of filing: **11.01.2023**

(51) International Patent Classification (IPC):
***C01G 53/00*** (2006.01)

(52) Cooperative Patent Classification (CPC):
**C01G 53/50;** C01P 2002/72; C01P 2002/85;
C01P 2004/61; C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022 KR 20220005685**

(71) Applicants:
• **SK On Co., Ltd.**
**Seoul 03161 (KR)**
• **SK Innovation Co., Ltd.**
**Seoul 03188 (KR)**

(72) Inventors:
• **CHOI, Ji Hoon**
**34124 Daejeon (KR)**

• **KWEON, Hee Jun**
**34124 Daejeon (KR)**
• **KIM, Sang Bok**
**34124 Daejeon (KR)**
• **PARK, Sang Min**
**34124 Daejeon (KR)**
• **LEE, Ji Sun**
**34124 Daejeon (KR)**
• **JEUN, Jeong Hoon**
**34124 Daejeon (KR)**
• **CHOI, Je Nam**
**34124 Daejeon (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL, PRECURSOR FOR LITHIUM SECONDARY BATTERY, CATHODE ACTIVE MATERIAL FOR LITHIUM SECONDARY BATTERY AND LITHIUM SECONDARY BATTERY**

(57) A cathode active material precursor for a lithium secondary battery is provided according to embodiments of the present invention. The cathode active material precursor for a lithium secondary battery includes a core including a first transition metal composite hydroxide, and a shell which is formed on the core and includes a second transition metal composite hydroxide in which the first transition metal composite hydroxide is doped with a doping metal including at least one of Group 4 to Group 12 metals, wherein the cathode active material precursor has a particle size distribution degree of 0.8 to 1.6 defined by Equation 1. Thereby, it is possible to suppress capacity degradation of the secondary battery due to doping while improving the structural stability of the cathode active material precursor.

FIG. 1

EP 4 227 269 A1

**Description**

BACKGROUND

1. Field

The present invention relates to a cathode for a cathode active material precursor for a lithium secondary battery and a preparation method thereof, a cathode active material for a lithium secondary battery, and a lithium secondary battery including the same.

2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped case in which the electrode assembly and the electrolyte are housed.

As a field, to which the lithium secondary battery is applied, is expanded to large devices such as a hybrid vehicle, etc., a high nickel (high-Ni)-based lithium oxide having an increased nickel content as a cathode active material to secure a high capacity of the lithium secondary battery is known in the art. The cathode active material may be prepared by reacting a transition metal-containing precursor with a lithium source.

However, the high nickel-based lithium oxide may cause a deterioration in life-span and operational stability of the lithium secondary battery due to side reactions with the electrolyte, and chemical and structural instability. Therefore, it is necessary to prevent a decrease in the battery capacity while enhancing the structural stability of the transition metal-containing precursor in order to improve the stability of the cathode active material.

For example, Korean Patent Registration No. 10-0821523 discloses a cathode active material containing a high nickel-based lithium composite oxide, but does not consider both the structural stability and capacity properties of the nickel-containing precursor as described above.

SUMMARY

According to an aspect of the present invention, there is provided a cathode active material precursor for a lithium secondary battery having improved structural and chemical stability.

According to an aspect of the present invention, there is provided a method of preparing a cathode active material precursor for a lithium secondary battery having improved structural and chemical stability.

According to an aspect of the present invention, there is provided a cathode active material for a lithium secondary battery, which has improved structural and chemical stability.

According to an aspect of the present invention, there is provided a lithium secondary battery including the cathode active material.

A cathode active material precursor for a lithium secondary battery includes a core including a first transition metal composite hydroxide; and a shell which is formed on the core and includes a second transition metal composite hydroxide containing a doping metal including at least one of Group 4 to Group 12 metals; wherein the cathode active material precursor has a particle size distribution degree of 0.8 to 1.6 defined by Equation 1.

[Equation 1]

$$\text{Particle size distribution degree} = (D90\text{-}D10)/D50$$

In Equation 1, D10, D50 and D90 are particle sizes of the cathode active material precursor at points where volume accumulation percentages are 10%, 50% and 90%, respectively, in the particle size distribution obtained through a particle size analyzer.

In some embodiments, the second transition metal composite hydroxide has a structure in which the first transition metal composite hydroxide is doped with the doping metal.

In some embodiments, the doping metal includes at least one of W, Nb, Mo and Ta.

In some embodiments, a content of the doping metal is 1000 to 5000 ppm based on a total weight of the second transition metal composite hydroxide.

In some embodiments, a particle with a small diameter of the core has a larger thickness of the shell.

In some embodiments, the shell has a thickness of 0.5 to 2 $\mu$m.

In some embodiments, a ratio of the thickness of the shell to a sum of a radius of the core and the thickness of the shell is 10 to 40 %.

In some embodiments, the first transition metal composite hydroxide is represented by Formula 1 below:

$$[Formula\ 1] \qquad Ni_{1-x-y}Co_xMn_y(OH)_{2+a}$$

wherein, in Formula 1, $0.02 \leq x \leq 0.15$, $0 \leq y \leq 0.15$, and $-0.5 \leq a \leq 0.1$.

A cathode active material for a lithium secondary battery includes lithium-transition metal composite oxide particles formed using the cathode active material precursor for a lithium secondary battery according to the above-described embodiments.

A lithium secondary battery includes a cathode which comprises a cathode active material layer comprising the cathode active material for a lithium secondary battery according to the above-described embodiments, and an anode disposed to face the cathode.

A method of preparing a cathode active material precursor for a lithium secondary battery includes forming a core having a first transition metal composite hydroxide structure by reacting a nickel source, a cobalt source and a manganese source in a continuous stirred tank reactor (CSTR), and forming a shell which includes a second transition metal composite hydroxide containing a doping metal by reacting the core with a doping metal source containing the doping metal including at least one of Group 4 to Group 12 metals in a batch reactor together.

In some embodiments, the doping metal source includes a nickel source, a cobalt source and a manganese source together.

In some embodiments, the method of preparing a cathode active material precursor for a lithium secondary battery further includes introducing the core into a storage reactor from the continuous stirred tank reactor.

In some embodiments, the method of preparing a cathode active material precursor for a lithium secondary battery further includes forming a shell on the core moved to the storage reactor by introducing a doping metal source containing a doping metal including at least one of Group 4 to Group 12 metals into the storage reactor.

In some embodiments, the step of introducing the core into the storage reactor includes moving the core from the continuous stirred tank reactor to the storage reactor when a level in the continuous stirred tank reactor is exceeded.

In some embodiments, the doping metal source is a basic aqueous solution in which the doping metal is dissolved.

In some embodiments, the method of preparing a cathode active material precursor for a lithium secondary battery further includes introducing the core into the batch reactor. The step of introducing the core into the batch reactor comprises moving the core from the continuous stirred tank reactor to the batch reactor when a level in the continuous stirred tank reactor is exceeded.

In an aspect of the present invention, a cathode active material precursor for a lithium secondary battery prepared by a method that includes forming a core having a first transition metal composite hydroxide structure by reacting a nickel source, a cobalt source and a manganese source in a continuous stirred tank reactor (CSTR), and forming a shell which includes a second transition metal composite hydroxide containing a doping metal by reacting the core with a doping metal source containing the doping metal including at least one of Group 4 to Group 12 metals in a batch reactor together is provided.

In an aspect of the present invention, a cathode active material formed by using the cathode active material precursor prepared by above-described method is provided.

The cathode active material precursor for a lithium secondary battery of the present invention has a core-shell form, and the shell includes a transition metal composite hydroxide doped with a doping metal. Thereby, metals having a high oxidation number (e.g., the doping metal) may be disposed only on a surface portion (e.g., the shell) of the cathode active material precursor. Accordingly, efficiency in a preparing process of the cathode active material may be increased by increasing a synthesis rate of the precursor in the core growth phase. In addition, by limiting a region where the doping metal of the cathode active material precursor is included to the surface portion, it is possible to suppress capacity degradation of the secondary battery due to doping while improving the structural stability.

The cathode active material precursor has a predetermined particle size distribution degree. Thereby, the cathode active material precursor may do not include excessively small fine powder and excessively large coarse powder, while securing sufficient wide particle size distribution thereof. Therefore, it is possible to suppress life-span properties and durability due to fine powder and coarse powder from being degraded, while preventing a decrease in the electrode density due to the absence of small-sized particles.

In the method of preparing a cathode active material precursor for a lithium secondary battery, the core is formed in a continuous stirred tank reactor and then transferred to a batch reactor to further form a shell. Thereby, it is possible to prepare a cathode active material precursor having a core-shell form, while economic advantages of the process are improved since continuous production is possible.

BRIEF DESCRIPTION OF THE DRAWINGS

FIGS. 1 and 2 are SEM-EDS images of cathode active material precursors according to exemplary embodiments, respectively.

FIG. 3 is a flowchart for describing processes in a method of preparing a cathode active material precursor according to exemplary embodiments.

FIG. 4 is a schematic view of an apparatus for preparing a cathode active material precursor according to exemplary embodiments.

FIGS. 5 and 6 are a schematic plan view and a cross-sectional view illustrating a lithium secondary battery according to exemplary embodiments, respectively.

FIG. 7 is a graph illustrating particle size-volume distribution of cathode active material precursors according to Example 1 and Comparative Example 2.

FIG. 8 is a graph illustrating crystallite sizes of the cathode active material precursors according to Example 1 and Comparative Example 2 for each calcination temperature.

DETAILED DESCRIPTION OF THE EMBODIMENTS

Embodiments of the present invention provide a cathode active material precursor for a lithium secondary battery containing a transition metal composite hydroxide, a preparation method thereof, and a cathode active material including the same. In addition, there is provided a lithium secondary battery which includes the cathode active material while having improved life-span and capacity properties.

Embodiments of the present invention will be described in more detail. However, since the drawings attached to the present disclosure and embodiments only serve to further understand the technical spirit of the present invention, it should not be construed as limited the present invention to such contents illustrated and described in the drawings and the embodiments.

A cathode active material precursor for a lithium secondary battery (hereinafter, may be abbreviated as a cathode active material precursor) is a compound having a core-shell structure including a transition metal composite hydroxide.

The core of the cathode active material precursor includes a first transition metal composite hydroxide. The first transition metal composite hydroxide may include two or more transition metals.

In some embodiments, the first transition metal composite hydroxide may be represented by Formula 1 below.

$$[\text{Formula 1}] \qquad Ni_{1-x-y}Co_xMn_y(OH)_{2+a}$$

In Formula 1, $0.02 \le x \le 0.15$, $0 \le y \le 0.15$, and $-0.5 \le a \le 0.1$.

For example, the first transition metal composite hydroxide is a Ni-Co-Mn hydroxide and may not be doped with other metals. Thereby, capacity properties of the secondary battery may be maintained or improved.

For example, the first transition metal composite hydroxide is provided as a high-nickel composite hydroxide, such that high-capacity properties of the secondary battery may be implemented.

A shell is formed on the core of the cathode active material precursor. The shell includes a second transition metal composite hydroxide containing a doping metal.

The doping metal includes at least one of Group 4 to Group 12 metals on the periodic table. Thereby, the doping metal may be inserted into a crystal structure to enhance structural stability of the cathode active material precursor. Accordingly, life-span properties of the secondary battery may be improved.

In some embodiments, the second transition metal composite hydroxide may have a structure in which the first transition metal composite hydroxide is doped with the above-described doping metal. Accordingly, a cation mixing phenomenon may be suppressed while the crystal structure of the shell is stabilized.

The cation mixing phenomenon may be a phenomenon in which a lithium (Li) site of a layered structure is substituted with a transition metal such as nickel, etc., thus capacity and life-span properties of the cathode active material are reduced.

For example, particles including only the above-described second transition metal composite hydroxide without the core-shell structure may be used as a cathode active material precursor. However, in this case, a synthesis rate of the precursor may be decreased due to the doping metal in a nucleation phase of seed crystal and a growth phase. In addition, since the doping metals are distributed throughout the cathode active material precursor, capacity degradation may be intensified.

According to exemplary embodiments of the present invention, the cathode active material precursor has a core-shell structure, and an undoped first transition metal composite hydroxide may be provided as a core and a doped second transition metal composite hydroxide may be provided as a shell. In this case, metals having a high oxidation number (e.g., the doping metal) may be mainly disposed only on the surface portion (e.g., the shell) of the cathode active material precursor.

Accordingly, the efficiency in a preparing process of the cathode active material may be increased by increasing the synthesis rate of the precursor in the core growth phase. In addition, by limiting a region where the doping metal of the cathode active material precursor is included to the surface portion, it is possible to suppress capacity degradation of the secondary battery due to doping while improving the structural stability.

In some embodiments, the doping metal may include at least one selected from the group consisting of W, Nb, Mo and Ta. Thus, structural stability of the above-described cathode active material precursor may be sufficiently improved.

In some embodiments, a content of the doping metal included in the second transition metal composite hydroxide may be 1000 to 5000 ppm based on a total weight of the second transition metal composite hydroxide. Within the above content range, capacity degradation of the secondary battery due to excessive doping may be prevented while improving the structural stability of the cathode active material precursor.

The cathode active material precursor has a particle size distribution degree of 0.8 to 1.6 defined by Equation 1 below. In some embodiments, the particle size distribution degree may be 1.1 to 1.3.

[Equation 1]

$$\text{Particle size distribution degree} = (D90-D10)/D50$$

In Equation 1, D10, D50 and D90 are particle sizes of the cathode active material precursor at points where volume accumulation percentages are 10%, 50% and 90%, respectively, in the particle size distribution obtained through a particle size analyzer.

For example, a volume-size distribution of the precursor may be obtained using a laser diffraction scattering particle size analyzer.

For example, D10 may mean a particle size at a point where diameters of all precursor particles are accumulated from the small side and the accumulated volume becomes 10% of a sum volume of all the particles. For example, D50 may mean a particle size at a point where the diameters of all precursor particles are accumulated from the small side and the accumulated volume becomes 50% of the sum volume of all the particles. For example, D90 may mean a particle size at a point where the diameters of all precursor particles are accumulated from the small side and the accumulated volume becomes 90% of the sum volume of all the particles.

The particle size distribution degree may be provided as an index indicating, for example, the broadness of the particle size distribution.

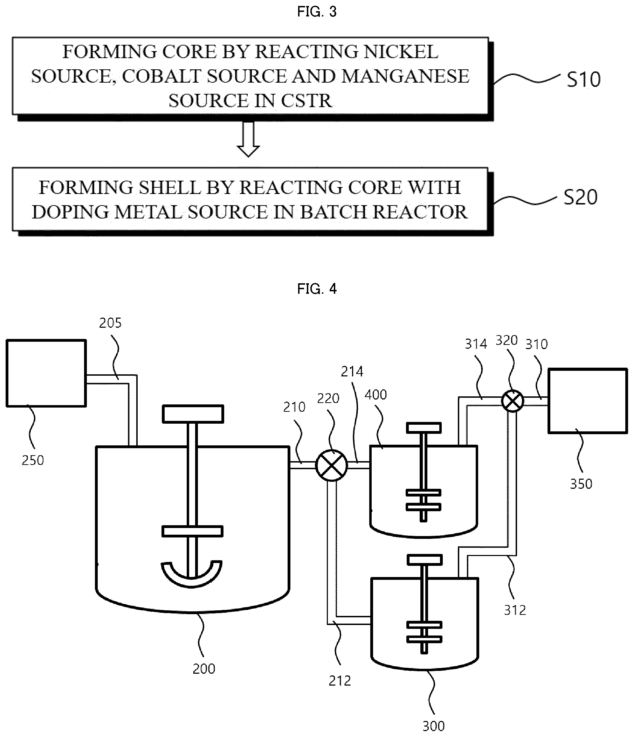

For example, the above-described particle size distribution degree may be implemented using a method of preparing a cathode active material precursor using a continuous stirred tank reactor and a batch reactor together. The preparation method will be described below with reference to FIG. 3.

Within the above particle size distribution degree range, the cathode active material precursor may do not include excessively small fine powder and excessively large coarse powder, while securing sufficient wide particle size distribution thereof. Therefore, it is possible to prevent life-span properties and durability due to fine powder and coarse powder from being degraded, while preventing a decrease in the electrode density due to the absence of small-sized particles.

If the particle size distribution degree is less than 0.8, for example, the particle size distribution is too narrow, such that the electrode density may be decreased. In order to improve electrode density, small-sized particles may be added to the cathode active material precursor, but in this case, it may have a bimodal particle size distribution. Accordingly, cracks may occur in the small-sized particles caused by the large-sized particles in the rolling process.

If the particle size distribution degree exceeds 1.6, for example, the cathode active material precursor may include excessively small fine powder and excessively large coarse powder. Thereby, a specific surface area of the cathode active material precursor may be increased to accelerate a side reaction with the electrolyte, and cracks may occur in the cathode active material precursor having a relatively small particle size due to the coarse powder in the rolling process.

For example, a degree of crystal growth may be different depending on the particle size of the particles. For example, the smaller the particle size, the faster an increase speed of the crystallite size may become with temperature increase. Therefore, when the cathode active material precursor has a wide particle size distribution degree, the crystallite size between the particles may grow non-uniformly. Accordingly, capacity properties and life-span properties of the secondary battery may be reduced.

For example, the doping metal may inhibit crystal growth with temperature increase.

According to exemplary embodiments of the present invention, a cathode active material precursor particle with a small diameter of the core may have a larger thickness of the shell. Thus, a relatively larger amount of the doping metal may be included in the cathode active material precursor particles having a small particle size than the cathode active material precursor particles having a large particle size. Therefore, by relatively much more suppressing the crystal growth of small-sized particles having a fast crystal growth rate with temperature increase, it is possible to implement a cathode active material precursor having the same or similar crystallite size as a whole. Accordingly, capacity properties and life-span properties of the secondary battery may be improved.

In addition, since crystal growth with temperature increase is suppressed, calcination treatment may be performed at a high temperature during forming the cathode active material. Thereby, residual lithium on the surfaces of the cathode active material particles may be reduced. Accordingly, life-span properties of the secondary battery may be improved.

The cathode active material precursor formed so that the cathode active material precursor particle with a small diameter of the core has a larger thickness of the shell may be implemented by forming the shell through simultaneous co-precipitation of a nickel source, a cobalt source, a manganese source, and a doping metal source.

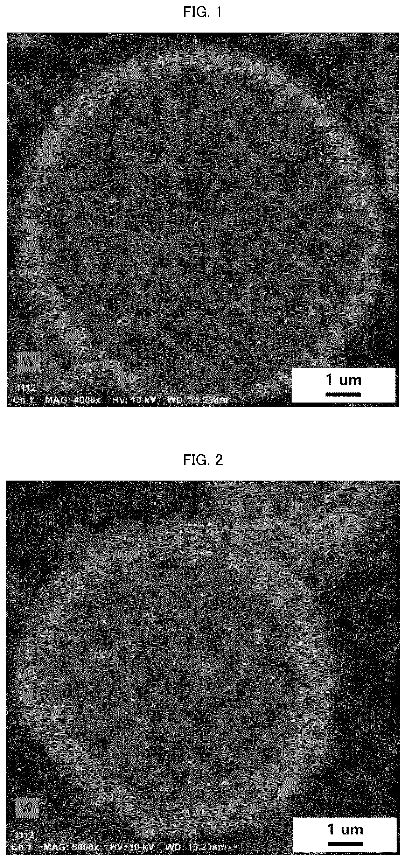

FIGS. 1 and 2 are scanning electron microscopy-energy dispersive X-ray spectroscopy (SEM-EDS) images of the cathode active material precursors, respectively, according to exemplary embodiments. Specifically, FIGS. 1 and 2 illustrate cathode active material precursor particles photographed by SEM-EDS, respectively. For example, in FIGS. 1 and 2, the light-colored circular band may represent the shell, and the dark circle inside the shell may represent the core.

Referring to FIGS. 1 and 2, the cathode active material precursor particle shown in FIG. 1 may have a relatively larger core diameter than that of the cathode active material precursor particle shown in FIG. 2. Thereby, the shell of the cathode active material precursor particle shown in FIG. 1 may have a smaller thickness than that of the shell of the cathode active material precursor particle shown in FIG. 2. Accordingly, the cathode active material precursor particles shown in FIGS. 1 and 2 may have substantially the same or similar crystallite size to each other.

The above-described crystallite size is a numerical value measured through X-ray diffraction (XRD) analysis. The crystallite size may be calculated and obtained through the Scherrer equation (Equation 2 below) using a full width at half maximum (FWHM) obtained through the XRD analysis.

$$[\text{Equation } 2]$$

$$L = \frac{0.9\lambda}{\beta cos\theta}$$

In Equation 2 above, L represents the crystallite size (nm), $\lambda$ represents an X-ray wavelength (nm), $\beta$ represents the full width at half maximum (rad) of the corresponding peak, and $\theta$ represents a diffraction angle (rad). According to exemplary embodiments, the full width at half maximum in XRD analysis for determining the crystallite size may be measured from the peak of a (104) plane.

In some embodiments, in Equation 2 above, $\beta$ may use the full width at half maximum obtained by correcting a value derived from equipment. In one embodiment, Si may be used as a standard material for reflecting the equipment-derived value. In this case, by plotting full width at half maximum profiles in a full range of 20 of Si, the equipment-derived full width at half maximum may be represented as a function of $2\theta$. Thereafter, a value corrected by subtracting the equipment-derived full width at half maximum value in the corresponding 20 obtained from the above function may be used as $\beta$.

In some embodiments, the shell may have a thickness of 0.5 to 2 $\mu$m, and preferably 0.65 to 1.5 $\mu$m. Within the above thickness range, capacity degradation due to excessive doping may be prevented while the doping metal is sufficiently included in the cathode active material precursor. Accordingly, capacity properties may be maintained or enhanced, while the structural stability of the cathode active material precursor is improved.

In some embodiments, a ratio of the thickness of the shell to a sum of the radius of the core and the thickness of the shell may range from 10 to 40 %. Within the above thickness ratio range, the content of the undoped first transition metal composite hydroxide may be appropriately maintained while the doping metal is sufficiently included in the cathode active material precursor. Accordingly, the capacity properties of the secondary battery may be maintained or improved, while the stability of the crystal structure of the cathode active material precursor is enhanced.

FIG. 3 is a flowchart for describing processes in a method of preparing a cathode active material precursor according to exemplary embodiments.

FIG. 4 is a schematic view of an apparatus for preparing a cathode active material precursor according to exemplary embodiments.

Hereinafter, the method of preparing a cathode active material precursor according to exemplary embodiments will be described with reference to FIGS. 3 and 4.

A core including a first transition metal composite hydroxide is formed by reacting a nickel source, a cobalt source and a manganese source in a continuous stirred tank reactor (CSTR) 200 (e.g., step S10).

For example, the nickel source may include at least one of nickel sulfate ($NiSO_4$), nickel hydroxide ($Ni(OH)_2$), nickel nitrate ($Ni(NO_3)_2$), nickel acetate ($Ni(CH_3CO_2)_2$) and a hydrate thereof.

For example, the cobalt source may include at least one of cobalt sulfate ($CoSO_4$), cobalt hydroxide ($Co(OH)_2$), cobalt nitrate ($Co(NO_3)_2$), cobalt carbonate ($CoCO_3$) and a hydrate thereof.

For example, the manganese source may include at least one of manganese sulfate ($MnSO_4$), manganese hydroxide ($Mn(OH)_2$), manganese nitrate ($Mn(NO_3)_2$), manganese acetate ($Mn(CH_3CO_2)_2$ and a hydrate thereof.

In one embodiment, the nickel sulfate, the cobalt sulfate and the manganese sulfate may be used as the nickel source, the cobalt source and the manganese source, respectively.

For example, a transition metal solution including the above-described nickel source, cobalt source and manganese source may be formed in a container 250 for storing a first aqueous metal solution.

The formed transition metal solution may be continuously supplied to the CSTR 200 through a first flow passage 205.

Distilled water is put into the CSTR 200 and nitrogen gas is supplied, then the above-described transition metal solution, a chelating agent and a pH adjuster may be continuously introduced into the CSTR 200 while stirring the mixture. In this case, nucleation and growth of the cathode active material precursor may occur simultaneously, such that a wide particle size distribution of the cathode active material precursor may be formed.

For example, the cathode active material precursor may be formed using a batch reactor alone. However, in this case, the particle size distribution of the cathode active material precursor may be narrowed to have a unimodal particle size distribution. When preparing a cathode from a cathode active material synthesized using a precursor having a unimodal particle size distribution, electrode density may be decreased.

The chelating agent may include, for example, ammonium hydroxide (e.g., $NH_4OH$), ammonium carbonate (e.g., $NH_3HCO_3$) and the like.

The pH adjuster may include, for example, ammonia, NaOH and the like.

Since the CSTR 200 is a continuous reactor, for example, reaction stop and washing process for obtaining the synthesized cathode active material precursor may not be required. Thereby, continuous production is possible, and the economic advantages of the process may be improved. However, in the CSTR 200, it may not be easy to synthesize a cathode active material precursor having a core-shell form.

A shell is formed on the core by reacting the core formed in the CSTR 200 with the doping metal source containing the above-described doping metal in a batch reactor 300 (e.g., step S20). Thus, it is possible to prepare the cathode active material precursor having a core-shell form while enhancing economic advantages by using the CSTR 200 and the batch reactor together.

In some embodiments, the doping metal source may include the doping metal, the nickel source, the cobalt source and the manganese source together. Thus, the doping metal may be co-precipitated together with the nickel source, the cobalt source and the manganese source by introducing the doping metal source into the batch reactor. Therefore, a thick shell is formed on the core with a small diameter, such that a particle with a small particle size may more suppress crystal growth in the calcination process. Accordingly, the cathode active material precursors have substantially the same or similar crystallite size as a whole, such that life-span properties and output properties may be improved.

In some embodiments, the core may be introduced into the batch reactor 300 from the CSTR200.

For example, since supply and reaction are continuously performed in the CSTR 200, an amount of the reaction solution after a predetermined time may overflow a level in the CSTR 200.

The term "overflowing a level" as used herein may mean a case where the reaction solution overflows an optimal level at which a reaction can be smoothly performed in a reactor or a case where the reaction solution overflows a predetermined level set in advance.

In some embodiments, introduction into the batch reactor 300 from the CSTR 200 may be performed by moving a reaction solution overflowing the level in the CSTR 200 from the CSTR 200 to the batch reactor 300. Thus, the core formation reaction may be continuously performed in the CSTR 200 without stopping the process.

For example, the reaction solution overflowing the level in the CSTR 200 may move to the batch reactor 300 through a second flow passage 210, a first valve 220 and a third flow passage 212. In this case, the first valve 220 may block the core from moving to a fourth flow passage 214 connected to a storage reactor 400, which will be described below.

For example, the reaction solution overflowing the level in the CSTR 200 may pass through a filtering apparatus (not shown) such as a centrifuge or a filter before being introduced into the batch reactor 300. In this case, unreacted nickel source, unreacted cobalt source, unreacted manganese source and pH adjuster among the reaction solution moving in the CSTR 200 may be filtered by the filtering apparatus and reintroduced into the CSTR 200. Thus, only the core formed in the CSTR 200 may be introduced into the batch reactor 300.

In some embodiments, the reaction solution overflowing the level in the CSTR 200 may be introduced into the storage reactor 400. For example, while the shell formation reaction to be described below is performed in the batch reactor 300, the reaction solution overflowing the level in the CSTR 200 may be introduced into the storage reactor 400 to be stored. For example, the storage reactor 400 may have substantially the same size and shape as the batch reactor 300.

For example, the reaction solution overflowing the level in the CSTR 200 may move to the storage reactor 400 through the second flow passage 210, the first valve 220 and the fourth flow passage 214. In this case, the first valve 220 may block the core from moving to the third flow passage 212 connected to the batch reactor 300.

In some embodiments, the above-described shell formation reaction may also be performed in the storage reactor 400.

In one embodiment, the shell formation reaction may be performed alternately in the batch reactor 300 and the storage reactor 400, and a reactor in which the shell formation reaction is not performed may serve as a container for storing the reaction solution.

For example, while the shell formation reaction is performed in the batch reactor 300, the first valve 220 may block the core from moving to the third flow passage 212. In this case, the core may be introduced into the storage reactor 400 through the fourth flow passage 214.

For example, while the shell formation reaction is performed in the storage reactor 400, the first valve 220 may block the core from moving to the fourth flow passage 214. In this case, the core may be introduced into the batch reactor 300 through the third flow passage 212.

In some embodiments, the doping metal source may be a basic aqueous solution in which the above-described nickel source, cobalt source, manganese source and doping metal are dissolved. For example, the basic aqueous solution may be formed in a container 350 for storing a second aqueous metal solution.

For example, the basic aqueous solution may be formed by dissolving a doping metal oxide powder in a lithium hydroxide solution, and then dissolving the prepared solution in a sodium hydroxide solution. For example, the doping metal oxide powder introduced into the lithium hydroxide solution may be dissolved in a concentration of 0.05 to 0.5 M.

The doping metal oxide powder may include, for example, at least one of WOs, NbzOs and TazOs.

For example, the basic aqueous solution may be formed by dissolving a doping metal oxide salt in distilled water. For example, the doping metal oxide salt may be dissolved in a concentration of 0.05 to 0.5 M.

The doping metal oxide salt may include, for example, $Na_2WO_4$.

For example, the basic aqueous solution may be formed by dissolving an ammonium salt of a doping metal oxide in distilled water. For example, the ammonium salt of the doping metal oxide may be dissolved in a concentration of 0.05 to 0.5 M.

The ammonium salt of the doping metal oxide may be, for example, at least one of ammonium paratungstate $((NH_4)_{10}(H_2W_{12}O_{42})•4H_2O)$ and ammonium heptamolybdate $((NH_4)_6Mo_7O_{24})$.

In some embodiments, the formed basic aqueous solution may be introduced into the batch reactor 300 or the storage reactor 400.

For example, the basic aqueous solution may be introduced into the batch reactor 300 through a fifth flow passage 310, a second valve 320 and a sixth flow passage 312. Thus, the second valve 320 may prevent the basic aqueous solution from moving to a seventh flow passage 314 connected to the storage reactor 400.

For example, the basic aqueous solution may be introduced into the storage reactor 400 through the fifth flow passage 310, the second valve 320 and the seventh flow passage 314. Accordingly, the second valve 320 may prevent the basic aqueous solution from moving to the sixth flow passage 312 connected to the batch reactor 300.

Thus, the doping metal source (e.g., basic aqueous solution) may be selectively introduced only into a reactor in which the shell formation reaction is performed.

In some embodiments, a shell including the second transition metal composite hydroxide may be formed on the core by simultaneously co-precipitating the nickel source, the cobalt source, the manganese source and the doping metal source in the batch reactor 300. Thereby, as described above, the thickness of the shell of the precursor particle with a small core diameter may be greater than that of the shell of the precursor particle with a large core diameter. Thus, in the calcination process for forming the cathode active material, the crystallite size of the cathode active material precursor may uniformly grow, thereby enhancing the life-span properties and capacity properties of the secondary battery.

In addition, since the shell is formed by additionally introducing the doping metal source in a reactor (e.g., batch reactor 300) separate from a core generation reactor (e.g., CSTR 200), the doping metal may be intensively disposed on the surface portions (e.g., shell) of the cathode active material precursor particles. Thereby, structural stability of the cathode active material precursor may be improved while preventing the capacity degradation of the secondary battery.

In some embodiments, the batch reactor 300 and the storage reactor 400 may have a capacity of 5 % to 20 % by volume based on that of the CSTR 200, respectively. Within the above range, a shell formation reaction time may be shortened, such that a production rate of the cathode active material precursor may be optimized.

For example, a temperature of the co-precipitation reaction for shell formation may be greater than 50 °C and less than 80 °C. The co-precipitation reaction time may be 2 hours to 5 hours.

For example, the above-described chelating agent and pH adjuster may also be introduced and used in the co-precipitation reaction for shell formation. In this case, types and amounts of the chelating agent and the pH adjuster may be adjusted according to the reaction conditions.

In some embodiments, the cathode active material precursor may be obtained by performing heat treatment on precipitated reactant. For example, a cathode active material precursor having a stabilized crystal structure may be formed by performing heat treatment at a temperature of about 100 °C to 150 °C for 10 hours to 30 hours. Preferably, the heat treatment temperature may be about 100 °C to 130 °C, and the heat treatment time may be 10 hours to 20 hours.

According to exemplary embodiments, there is provided a cathode active material for a lithium secondary battery (hereinafter, may be abbreviated as a cathode active material) synthesized using the above-described cathode active material precursor.

The cathode active material includes a lithium-transition metal composite oxide. As described above, the cathode active material may contain nickel, cobalt and manganese. For example, the cathode active material may include a nickel-cobalt-manganese (NCM)-based lithium oxide.

As described above, among elements except for lithium and oxygen included in the cathode active material, Ni may be included in the largest content (molar ratio or atomic %).

For example, the content of Ni may be 0.6 or more, preferably 0.7 or more, and more preferably 0.8 or more.

In exemplary embodiments, the cathode active material precursor according to the above-described embodiments may be mixed with the lithium precursor.

The lithium precursor compound may include, for example, lithium carbonate, lithium nitrate, lithium acetate, lithium oxide, lithium hydroxide and the like. These may be used alone or in combination of two or more thereof.

After the mixing, a cathode active material including lithium-transition metal composite oxide particles may be formed through a heat treatment (calcination) process.

The heat treatment may be performed at 650 °C to 800 °C under an oxygen atmosphere. Within the above range, due to the high-temperature reaction, lithium remaining on the surfaces of the lithium-transition metal composite oxide particles may be reduced. Thus, the life-span properties and capacity properties of the secondary battery may be improved.

Further, in the above-described cathode active material precursor, since the crystal growth rate with temperature increase is uniform regardless of the particle size, it is possible to prevent the precursor from being excessively large in the crystallite size or being non-uniformly formed during the high-temperature calcination. Thus, deterioration in the life-span properties of the secondary battery caused by heat treatment at a high temperature may be prevented.

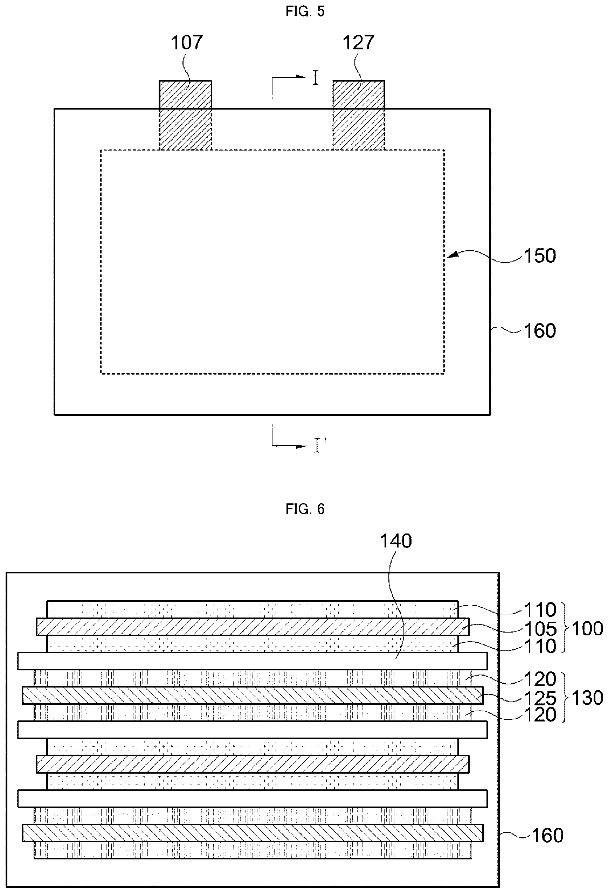

FIGS. 5 and 6 are a schematic plan view and a cross-sectional view illustrating a lithium secondary battery according to exemplary embodiments, respectively.

Hereinafter, a lithium secondary battery including a cathode including the above-described cathode active material for a lithium secondary battery will be described with reference to FIGS. 5 and 6.

Referring to FIGS. 5 and 6, the lithium secondary battery includes a cathode 100 including a cathode active material synthesized using the above-described cathode active material precursor, and an anode 130 disposed to face the cathode 100.

The cathode 100 may include a cathode active material layer 110 formed by applying a cathode active material including the above-described lithium-transition metal oxide particles to a cathode current collector 105.

For example, a slurry may be prepared by mixing the cathode active material synthesized from the above-described cathode active material precursor with a binder, a conductive material, and/or a dispersant in a solvent, followed by stirring the same. The slurry may be coated on the cathode current collector 105, followed by compressing and drying to form the cathode.

The cathode current collector 105 may include, for example, stainless steel, nickel, aluminum, titanium, copper, or an alloy thereof, and preferably includes aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material may be relatively increased. Thereby, the output and capacity of the secondary battery may be improved.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO3, and LaSrMnO3, etc.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at a temperature of 1500°C or lower, mesophase pitch-based carbon fiber (MPCF) or the like. Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersing material in a solvent, followed by stirring the same. The anode current collector may be coated with the slurry, followed by compressing and drying to manufacture the anode 130.

As the binder and the conductive material, materials which are substantially the same as or similar to the above-described materials may be used. In some embodiments, the binder for forming the anode may include, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly may be housed in an case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

As illustrated in FIG. 6, electrode tabs (a cathode tab and an anode tab) protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

Hereinafter, specific experimental examples are proposed to facilitate understanding of the present invention.

However, the following examples are only given for illustrating the present invention and those skilled in the art will obviously understand that various alterations and modifications are possible within the scope and spirit of the present invention. Such alterations and modifications are duly included in the appended claims.

## Example 1

### (1) Preparation of cathode active material precursor

An aqueous metal solution having a molar ratio of 0.88:0.09:0.03 of $NiSO_4$, $CoSO_4$ and $MnSO_4$ was prepared in a container for storing a first aqueous metal solution.

Distilled water was filled in a CSTR, and $N_2$ gas, the aqueous metal solution, NH4OH as a chelating agent, and NaOH as a pH adjuster were continuously supplied while stirring to prepare a core including a first transition metal composite hydroxide having a composition of $Ni_{0.88}Co_{0.09}Mn_{0.03}(OH)_2$ (step S10).

Cores included in the reaction solution overflowing a predetermined level in the CSTR were supplied to a batch reactor.

After dissolving a $WO_3$ powder in a LiOH solution in a container for storing a second aqueous metal solution, the prepared solution was dissolved in the NaOH solution. A basic aqueous solution was prepared by adding the prepared solution to an aqueous metal solution having a molar ratio of 0.88:0.09:0.03 of $NiSO_4$, $CoSO_4$ and $MnSO_4$. The basic aqueous solution was introduced into a batch reactor.

A shell including a second transition metal composite hydroxide doped with W in $Ni_{0.88}Co_{0.09}Mn_{0.03}(OH)_2$ was formed on a core by simultaneously co-precipitating the core and the basic aqueous solution in a batch reactor (step S20). An input amount of the solution containing W was adjusted so that the content of W based on a total weight of the formed second transition metal composite hydroxide was 4000 ppm.

The core-shell structure was subjected to heat treatment in an oven at 120 °C for 10 hours to obtain a cathode active material precursor.

### (2) Preparation of cathode active material

The obtained cathode active material precursor was mixed with LiOH in a molar ratio of 1: 1.05, and then calcined at 765 °C under an oxygen atmosphere for 20 hours. Thereafter, a cathode active material in the form of lithium-transition metal composite oxide particles was obtained through pulverization, water washing and post-calcination processes at 300 °C.

### (3) Manufacture of lithium secondary battery

A secondary battery was manufactured using the above-described cathode active material. Specifically, the cathode active materials, Denka Black as a conductive material and PVDF as a binder were mixed in a mass ratio composition of 93:5:2, respectively, to prepare a cathode slurry. Then, the slurry was applied to an aluminum current collector, followed by drying and pressing the same to prepare a cathode. After the pressing, an electrode density of the cathode was controlled in a range of 3.0 g/cc.

Lithium metal was used as an anode active material.

The cathode and anode prepared as described above were notched in a circular shape having a diameter of Φ14 and Φ16, respectively, and laminated, then an electrode cell was prepared by disposing a separation membrane (polyethylene, thickness: 13 μm) notched to Φ19 between the cathode and the anode. The prepared electrode cell was put into a coin cell case having a specification of diameter of 20 mm and a height of 1.6 mm, then an electrolyte was injected and assembled, followed by aging for 12 hours or more so that the electrolyte could be impregnated inside the electrodes to manufacture a lithium secondary battery.

The electrolyte used herein was prepared by dissolving 1M LiPF6 solution in a mixed solvent of EC/EMC (30/70; volume ratio).

The secondary battery manufactured as described above was subjected to formation charging-discharging (charge condition: CC-CV 0.1C 4.3 V 0.005C CUT-OFF, discharge condition: CC 0.1C 3 V CUT-OFF).

## Example 2

A cathode active material precursor, a cathode active material, and a lithium secondary battery were prepared according to the same procedures as described in Example 1, except that the input amount of the solution containing W was adjusted so that the content of W based on the total weight of the second transition metal composite hydroxide was 2000 ppm, and that the cathode active material was calcined at 750 °C during preparation thereof.

### Example 3

A cathode active material precursor, a cathode active material, and a lithium secondary battery were prepared according to the same procedures as described in Example 1, except that a basic aqueous solution of the doping metal source was prepared by dissolving ammonium heptamolybdate powder in distilled water in a container for storing a second aqueous metal solution so that the content of Mo was 4000 ppm based on the total weight of the second transition metal composite hydroxide.

### Example 4

A cathode active material precursor, a cathode active material, and a lithium secondary battery were prepared according to the same procedures as described in Example 1, except that a basic aqueous solution of the doping metal source was prepared by dissolving NbzOs powder in LiOH in a container for storing a second aqueous metal solution so that the Content of Nb was 4000 ppm based on the total weight of the second transition metal composite hydroxide.

### Example 5

A cathode active material precursor, a cathode active material, and a lithium secondary battery were prepared according to the same procedures as described in Example 1, except that a basic aqueous solution of the doping metal source was prepared by dissolving $Ta_2O_5$ powder in LiOH in a container for storing a second aqueous metal solution so that the content of Ta based on the total weight of the formed shell was 4000 ppm.

### Example 6

A cathode active material precursor, a cathode active material, and a lithium secondary battery were prepared according to the same procedures as described in Example 1, except that the input amount of the solution containing W was adjusted so that the content of W based on the total weight of the second transition metal composite hydroxide was 800 ppm, and that the cathode active material was calcined at 745 °C.

### Example 7

A cathode active material precursor, a cathode active material, and a lithium secondary battery were prepared according to the same procedures as described in Example 1, except that the input amount of the solution containing W was adjusted so that the content of W based on the total weight of the second transition metal composite hydroxide was 5300 ppm, and that the cathode active material was calcined at 775 °C.

### Example 8

A cathode active material precursor, a cathode active material, and a lithium secondary battery were prepared according to the same procedures as described in Example 1, except that the input amount of the solution containing W was adjusted so that the content of W based on the total weight of the second transition metal composite hydroxide was 1100 ppm, and that the cathode active material was calcined at 745 °C.

### Example 9

A cathode active material precursor, a cathode active material, and a lithium secondary battery were prepared according to the same procedures as described in Example 1, except that the amount of WO3 powder was adjusted so that the content of W based on the total weight of the second transition metal composite hydroxide was 4800 ppm, and that the cathode active material was calcined at 770 °C.

### Comparative Example 1

$NiSO_4$, $CoSO_4$ and $MnSO_4$ were mixed in a ratio of 0.88:0.09:0.03, respectively, using distilled water with internal dissolved oxygen removed by bubbling with $N_2$ for 24 hours. The solution was introduced into a reactor at 50 °C, and a co-precipitation reaction was performed for 48 hours using NaOH and NH4OH as a precipitant and a chelating agent to obtain $Ni_{0.88}Co_{0.09}Mn_{0.03}(OH)_2$ in a bulk form as a cathode active material precursor. The obtained precursor was dried at 80 °C for 12 hours and then again dried at 110 °C for 12 hours.
A cathode active material and a lithium secondary battery were prepared according to the same procedures as described in Example 1, except that the cathode active material precursor was used and calcined at 735 °C when the cathode active material was produced.

**Comparative Example 2**

In a batch reactor, the basic aqueous solution of Example 1 was mixed with a mixed solution in which NiSO4, CoSO4 and MnSO4 were mixed in a ratio of 0.88:0.09:0.03, and the co-precipitation reaction of Comparative Example 1 was performed to obtain $Ni_{0.88}Co_{0.09}Mn_{0.03}(OH)_2$ (bulk form) doped with W as a cathode active material precursor. At this time, the input amount of the $WO_3$ powder was adjusted so that the content of W based on the total weight of the cathode active material precursor was 4000 ppm.
A cathode active material and a lithium secondary battery were prepared according to the same procedures as described in Example 1, except that the cathode active material precursor was used.

**Comparative Example 3**

$Ni_{0.88}Co_{0.09}Mn_{0.03}(OH)_2$ doped with W was obtained as a core according to the same procedures as described in Comparative Example 2. A mixed solution of $NiSO_4$, $CoSO_4$ and $MnSO_4$ was added to the reactor by the same manner as described in Comparative Example 1, and co-precipitated to form $Ni_{0.88}Co_{0.09}Mn_{0.03}(OH)_2$ as a shell on the core. The core-shell structure was subjected to heat treatment in an oven at 120 °C for 10 hours to obtain a cathode active material precursor.
A cathode active material and a lithium secondary battery were prepared according to the same procedures as described in Example 1, except that the cathode active material precursor was used.

**Experimental Example 1**

(1) Calculation of particle size distribution degree

A particle size-volume distribution was obtained for the cathode active material precursors obtained according to the above-described examples and comparative examples using a laser diffraction scattering particle size analyzer (model name: S3500, manufactured by Microtra).
A particle size distribution degree was calculated by obtaining D10, D50 and D90 from the above particle size-volume distribution and substituting them into Equation 1.

(2) Evaluation of thickness properties of shell

The cathode active material precursors obtained according to the above-described examples and comparative examples were photographed 10 times by SEM-EDS.
From the photographed images, a shell thickness, a diameter of the cathode active material precursor, and a ratio of the shell thickness to a sum of the radius of the cathode active material precursor and the shell thickness were calculated.

(3) Measurement of initial charge/discharge capacity and evaluation of initial capacity efficiency

After charging (CC-CV 0.1C 4.3 V 0.005C CUT-OFF) the lithium secondary batteries manufactured according to the above-described examples and comparative examples in a chamber at 25°C, battery capacities (initial charge capacities) were measured, and after discharging again (CC 0.1C 3.0 V CUT-OFF) the same, the battery capacities (initial discharge capacities) were measured.
Initial capacity efficiency of each lithium secondary battery was calculated by dividing the measured initial discharge capacity by the measured initial charge capacity, then converting it into a percentage (%).

(4) Measurement of capacity retention rate (life-time (cycle) properties) during repeated charging and discharging

The lithium secondary batteries according to the examples and comparative examples were repeatedly charged (CC/CV 0.5C 4.3 V 0.05C CUT-OFF) and discharged (CC 1.0C 2.5 V CUT-OFF) 100 times in a chamber at 45 °C, then the capacity retention rate was evaluated as a percentage of the discharge capacity at 100 times divided by the discharge capacity at one time.
The properties and evaluation results of the above-described examples and comparative examples are shown in Tables 1 to 3 below.

**EP 4 227 269 A1**

[TABLE 1]

| Section | D10 | D50 | D90 | Particle size distribution |
|---|---|---|---|---|
| Example 1 | 5.28 | 11.53 | 20.71 | 1.34 |
| Example 2 | 6.60 | 12.62 | 22.36 | 1.25 |
| Example 3 | 5.28 | 10.75 | 19.63 | 1.33 |
| Example 4 | 5.64 | 10.53 | 17.87 | 1.16 |
| Example 5 | 5.34 | 10.86 | 21.71 | 1.51 |
| Example 6 | 5.68 | 11.27 | 17.52 | 1.05 |
| Example 7 | 5.30 | 10.57 | 22.02 | 1.58 |
| Example 8 | 5.33 | 11.32 | 17.81 | 1.10 |
| Example 9 | 5.32 | 10.58 | 21.50 | 1.53 |
| Comparative Example 1 | 10 | 13.52 | 18.27 | 0.61 |
| Comparative Example 2 | 8.13 | 10.85 | 15.19 | 0.65 |
| Comparative Example 3 | 4.58 | 7.27 | 10.08 | 0.67 |

[TABLE 2]

| Section | Particle size distributio n | Doping metal | | Calcinatio n temperatu re (°C) | Shell thickness properties | | |
|---|---|---|---|---|---|---|---|
| | | Typ e | Content (ppm) | | Shell thickness (μm) | Precurso r diameter (μm) | Shell thickness ratio (%) |
| Example 1 | 1.34 | W | 4,000 | 765 | 0.71 | 10.33 | 13.7 |
| Example 2 | 1.25 | W | 2,000 | 750 | 0.83 | 9.27 | 17.9 |
| Example 3 | 1.33 | Mo | 4,000 | 765 | 0.76 | 9.74 | 15.6 |
| Example 4 | 1.16 | Nb | 4,000 | 765 | 0.85 | 8.90 | 19.1 |
| Example 5 | 1.51 | Ta | 4,000 | 765 | 1.02 | 8.00 | 25.5 |
| Example 6 | 1.05 | W | 800 | 745 | 0.65 | 11.50 | 11.3 |
| Example 7 | 1.58 | W | 5,300 | 775 | 1.45 | 7.86 | 36.9 |
| Example 8 | 1.10 | W | 1,100 | 745 | 0.4 | 8.33 | 9.6 |
| Example 9 | 1.53 | W | 4,800 | 770 | 2.2 | 10.48 | 42.0 |
| Comparative Example 1 | 0.61 | - | - | 735 | - | - | - |
| Comparative Example 2 | 0.65 | W | 4,000 | 765 | - | - | - |
| Comparative Example 3 | 0.67 | W | 4,000 | 765 | 0.89 | 8.86 | 20.1 |

[TABLE 3]

| Section | Initial charge amount (mAh/g) | Initial discharge amount (mAh/g) | Initial capacity efficiency (%) | Capacity retention rate (100 cycles, %) |
|---|---|---|---|---|
| Example 1 | 230.8 | 211.8 | 91.8 | 87.8 |

(continued)

| Section | Initial charge amount (mAh/g) | Initial discharge amount (mAh/g) | Initial capacity efficiency (%) | Capacity retention rate (100 cycles, %) |
|---|---|---|---|---|
| Example 2 | 231.5 | 210.9 | 91.1 | 85.0 |
| Example 3 | 231.1 | 210.1 | 90.9 | 83.1 |
| Example 4 | 230.6 | 212.2 | 92.0 | 83.3 |
| Example 5 | 230.5 | 211.7 | 91.8 | 82.8 |
| Example 6 | 232.6 | 213.2 | 91.7 | 79.2 |
| Example 7 | 231.3 | 210.3 | 90.9 | 89.5 |
| Example 8 | 232.4 | 212.8 | 91.6 | 80.5 |
| Example 9 | 231.2 | 210.1 | 90.9 | 88.3 |
| Comparative Example 1 | 236.9 | 210.1 | 88.7 | 68.7 |
| Comparative Example 2 | 229.6 | 206.7 | 90.0 | 89.1 |
| Comparative Example 3 | 227.8 | 205.5 | 90.2 | 87.7 |

Referring to Tables 1 to 3, the lithium secondary batteries of the examples, in which the doping metal was included only in the shell using the CSTR and the batch reactor, had improved discharge capacity, capacity efficiency and capacity retention rate as a whole compared to the lithium secondary batteries of the comparative examples.

In Example 6, since the content of the doping metal was less than 1,000 ppm based on the total weight of the second transition metal composite hydroxide, the capacity retention rate was reduced compared to other examples.

In Example 7, since the content of the doping metal exceeded 5,000 ppm based on the total weight of the second transition metal composite hydroxide, the initial discharge amount and capacity efficiency were reduced compared to other examples.

In Example 8, the doping metal was insufficient because the shell thickness was less than 10% of the diameter of the cathode active material precursor, such that the capacity retention rate was reduced compared to other examples.

In Example 9, since the thickness of the shell based on the diameter of the cathode active material precursor exceeded 40%, the initial capacity characteristics were reduced compared to other examples.

Referring to Table 2, as the amount of doping metal is increased, high-temperature calcination may be performed. Accordingly, residual lithium on the surfaces of the cathode active material particles may be removed, and lifespan characteristics of the secondary battery may be improved.

However, in Comparative Example 2, since the entire cathode active material precursor was doped with metal in a bulk form rather than having a core-shell structure, the initial discharge capacity was remarkably reduced.

In addition, in Comparative Example 3, only the core, which occupied most of the volume of the cathode active material precursor, was doped with metal, such that the initial discharge capacity was remarkably reduced.

In Comparative Examples 2 and 3, since the Ni source, the Co source, the Mn source and the doping metal source were added together from the core formation and growth phases, the crystal growth rate may be decreased, and thereby causing a reduction in economic advantages.

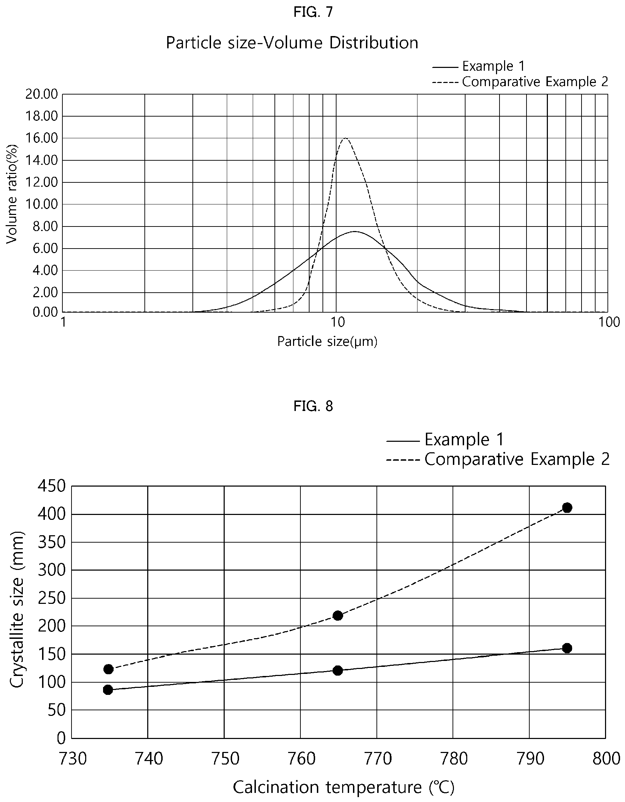

FIG. 7 is a graph illustrating particle size-volume distribution degrees of cathode active material precursors according to Example 1 and Comparative Example 2.

Referring to FIG. 7, the cathode active material precursor of Example 1 had a larger particle size distribution degree than the cathode active material precursor of Comparative Example 2 formed in the batch reactor, because the core was generated through continuous reaction in the CSTR. Thereby, a high-density electrode may be implemented, and structural stability of the cathode active material precursor may be enhanced.

**Experimental Example 2**

Evaluation of increase speed of crystallite size with temperature increase

The cathode active material precursors according to Example 1 and Comparative Example 2 were mixed with LiOH in a molar ratio of 1: 1.05, and then calcined at 735 °C under an oxygen atmosphere for 20 hours. Then, cathode active materials in the form of lithium-transition metal composite oxide particles were obtained through pulverization, water washing and post-calcination processes at 300 °C.

Thereafter, cathode active materials were obtained in the same manner as described above while changing the calcination temperature to 765 °C and 795 °C.

Crystallite sizes of the obtained cathode active material particles for each calcination temperature were calculated using the above-described Equation 2. The calculation results are shown in Table 5 and FIG. 8.

Meanwhile, specific XRD analysis equipment/conditions are as described in Table 4 below.

[TABLE 4]

| XRD(X-Ray Diffractometer) EMPYREAN | |
| --- | --- |
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.0065° |
| Divergence slit | 1/4° |
| Antiscatter slit | 1/2° |

[TABLE 5]

| Calcination temperature (°C) | Crystallite size (nm) | |
| --- | --- | --- |
| | Example 1 | Comparative Example 2 |
| 735 | 89 | 126 |
| 765 | 122 | 221 |
| 795 | 162 | 413 |

FIG. 8 is a graph illustrating crystallite sizes of the cathode active material precursors according to Example 1 and Comparative Example 2 for each calcination temperature.

Referring to Table 5 and FIG. 8, the cathode active material precursors of Example 1 had a core-shell form, and the cathode active material precursor with a smaller diameter of the core had a larger thickness of the shell. Accordingly, the small-sized particles having a faster crystal growth rate included more crystal growth inhibitor (e.g., doping metal), such that the crystal growth rate was uniform and low as a whole.

In the cathode active material precursors of Comparative Example 2, the content of the doping metal could not be adjusted according to the particle size because the doping metal was included in a bulk form, and thereby the increase speed of crystallite size was significantly increased compared to the cathode active material precursor of Example 1.

Therefore, the cathode active material of Comparative Example 2 had a non-uniform and excessively large crystallite size, such that the capacity characteristics were significantly reduced (see Table 3).

**Claims**

1. A cathode active material precursor for a lithium secondary battery comprising:

a core including a first transition metal composite hydroxide; and
a shell which is formed on the core and includes a second transition metal composite hydroxide containing a doping metal including at least one of Group 4 to Group 12 metals;
wherein the cathode active material precursor has a particle size distribution degree of 0.8 to 1.6 defined by Equation 1 below:

[Equation 1]

$$Particle\ size\ distribution\ degree = (D90\text{-}D10)/D50$$

wherein, in Equation 1, D10, D50 and D90 are particle sizes of the cathode active material precursor at points where volume accumulation percentages are 10%, 50% and 90%, respectively, in the particle size distribution obtained through a particle size analyzer.

2. The cathode active material precursor for a lithium secondary battery according to claim 1, wherein the second transition metal composite hydroxide has a structure in which the first transition metal composite hydroxide is doped with the doping metal.

3. The cathode active material precursor for a lithium secondary battery according to claims 1 or 2, wherein the doping metal includes at least one of W, Nb, Mo and Ta.

4. The cathode active material precursor for a lithium secondary battery according to any one of claims 1 to 3, wherein a content of the doping metal is 1000 to 5000 ppm based on a total weight of the second transition metal composite hydroxide.

5. The cathode active material precursor for a lithium secondary battery according to any one of claims 1 to 4, wherein a particle with a small diameter of the core has a larger thickness of the shell,
and/or wherein the shell has a thickness of 0.5 to 2 $\mu$m.

6. The cathode active material precursor for a lithium secondary battery according to any one of claims 1 to 5, wherein a ratio of the thickness of the shell to a sum of a radius of the core and the thickness of the shell is 10 to 40 %.

7. The cathode active material precursor for a lithium secondary battery according to any one of claims 1 to 6, wherein the first transition metal composite hydroxide is represented by Formula 1 below:

[Formula 1]     $Ni_{1-x-y}Co_xMn_y(OH)_{2+a}$

wherein, in Formula 1, $0.02 \leq x \leq 0.15$, $0 \leq y \leq 0.15$, and $-0.5 \leq a \leq 0.1$.

8. A cathode active material for a lithium secondary battery including lithium-transition metal composite oxide particles formed using the cathode active material precursor according to any one of claims 1 to 7.

9. A lithium secondary battery comprising:

a cathode which comprises a cathode active material layer comprising a cathode active material of claim 8; and
an anode disposed to face the cathode.

10. A method of preparing a cathode active material precursor for a lithium secondary battery comprising:

forming a core having a first transition metal composite hydroxide structure by reacting a nickel source, a cobalt source and a manganese source in a continuous stirred tank reactor (CSTR) (200); and
forming a shell which includes a second transition metal composite hydroxide containing a doping metal by reacting the core with a doping metal source containing the doping metal including at least one of Group 4 to Group 12 metals in a batch reactor (300) together.

11. The method of preparing a cathode active material precursor for a lithium secondary battery according to claim 10, wherein the doping metal source includes a nickel source, a cobalt source and a manganese source together.

12. The method of preparing a cathode active material precursor for a lithium secondary battery according to claim 10 or 11, wherein the doping metal source is a basic aqueous solution in which the doping metal is dissolved.

13. The method of preparing a cathode active material precursor for a lithium secondary battery according to any one of claims 10 to 12, further comprising introducing the core into the batch reactor (300),
wherein the step of introducing the core into the batch reactor (300) comprises moving the core from the continuous stirred tank reactor (200) to the batch reactor (300) when a level in the continuous stirred tank reactor (200) is exceeded.

14. The method of preparing a cathode active material precursor for a lithium secondary battery according to any one of claims 10 to 13, further comprising introducing the core into a storage reactor (400) from the continuous stirred tank reactor (200),
wherein the step of introducing the core into the storage reactor (400) comprises moving the core from the continuous stirred tank reactor (200) to the storage reactor (400) when a level in the continuous stirred tank reactor (200) is exceeded.

15. The method of preparing a cathode active material precursor for a lithium secondary battery according to claims 14, further comprising forming a shell on the core moved to the storage reactor (400) by introducing a doping metal source containing a doping metal including at least one of Group 4 to Group 12 metals into the storage reactor (400).

FIG. 1

FIG. 2

FIG. 3

| FORMING CORE BY REACTING NICKEL SOURCE, COBALT SOURCE AND MANGANESE SOURCE IN CSTR | S10 |

| FORMING SHELL BY REACTING CORE WITH DOPING METAL SOURCE IN BATCH REACTOR | S20 |

FIG. 4

FIG. 5

FIG. 6

FIG. 7

Particle size-Volume Distribution

FIG. 8

Europäisches
Patentamt

European
Patent Office

Office européen
des brevets

# EUROPEAN SEARCH REPORT

Application Number

EP 23 15 1178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/000868 A1 (HUNAN SHANSHAN NEW ENERGY CO LTD [CN]) 7 January 2021 (2021-01-07) | 1 | INV. C01G53/00 |
| Y | * examples 1-4 * | 1-15 | |
| X | US 2017/155146 A1 (LEE BO RAM [KR] ET AL) 1 June 2017 (2017-06-01) | 1 | |
| Y | * examples 1-4 * | 1-15 | |
| Y | WO 2020/101331 A1 (IUCF HYU [KR]) 22 May 2020 (2020-05-22) * examples 1-4; table 4 * | 1-15 | |

TECHNICAL FIELDS SEARCHED (IPC)

C01G

The present search report has been drawn up for all claims

| Place of search | Date of completion of the search | Examiner |
|---|---|---|
| Munich | 3 July 2023 | Timmermans, Michel |

EPO FORM 1503 03.82 (P04C01)

## ANNEX TO THE EUROPEAN SEARCH REPORT
## ON EUROPEAN PATENT APPLICATION NO.

EP 23 15 1178

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2023

| Patent document cited in search report | | Publication date | Patent family member(s) | | Publication date |
|---|---|---|---|---|---|
| WO 2021000868 | A1 | 07-01-2021 | CN | 112186138 A | 05-01-2021 |
| | | | EP | 3996171 A1 | 11-05-2022 |
| | | | JP | 2022542774 A | 07-10-2022 |
| | | | KR | 20220019046 A | 15-02-2022 |
| | | | US | 2022416236 A1 | 29-12-2022 |
| | | | WO | 2021000868 A1 | 07-01-2021 |
| US 2017155146 | A1 | 01-06-2017 | NONE | | |
| WO 2020101331 | A1 | 22-05-2020 | US | 2022020982 A1 | 20-01-2022 |
| | | | WO | 2020101331 A1 | 22-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100821523